**Europäisches Patentamt**

**European Patent Office**

**Office européen des brevets**

(19)

(11) Publication number : **0 578 693 B1**

## (12) EUROPEAN PATENT SPECIFICATION

(45) Date of publication of patent specification :
**30.08.95 Bulletin 95/35**

(51) Int. Cl.$^6$ : **H02G 1/08, G02B 6/44**

(21) Application number : **92907626.3**

(22) Date of filing : **09.03.92**

(86) International application number :
**PCT/IT92/00026**

(87) International publication number :
**WO 92/17927 15.10.92 Gazette 92/26**

(54) **A METHOD AND APPARATUS FOR LAYING A CABLE INTO A TUBE BY MEANS OF A PRESSURIZED HYDRAULIC FLUID.**

(30) Priority : **05.04.91 IT RM910231**

(43) Date of publication of application :
**19.01.94 Bulletin 94/03**

(45) Publication of the grant of the patent :
**30.08.95 Bulletin 95/35**

(84) Designated Contracting States :
**BE DE DK ES GB GR NL SE**

(56) References cited :
**EP-A- 0 264 767**
**EP-A- 0 422 827**
**EP-A- 0 442 626**
**EP-A- 0 467 463**
**WO-A-87/02522**
**GB-A- 2 190 457**
**US-A- 4 382 581**
**US-A- 4 756 510**

(73) Proprietor : **EMBERTI-GIALLORETI, Ugo**
**Largo dell'Olgiata, 15,**
**Isola 4**
**I-00123 Rome (IT)**

(72) Inventor : **EMBERTI-GIALLORETI, Ugo**
**Largo dell'Olgiata, 15,**
**Isola 4**
**I-00123 Rome (IT)**

(74) Representative : **Taliercio, Antonio et al**
**ING. BARZANO' & ZANARDO ROMA S.p.A.**
**Via Piemonte, 26**
**I-00187 Roma (IT)**

## Description

The present invention generally relates to the systems for laying a cable into a guide conduit and is concerned more particularly with the laying of a cable, such as a fiber optics cable and the like, into a guide conduit utilizing a hydraulic fluid, such as water and the like, as the main means for the flotation, the transport and/or the laying of the cable.

As it is known, the conventional laying technique provides that the cables suitably protected are layed after the excavation of an "opencast" trench. This involves, besides a vast amount of work with the consequent labour employment, also a high cost: indeed, it has been estimated that, in a cable telephone installation, civil work, such as excavations, embankments, rehabilitations, etc., weighs upon the total costs even in an amount of 70% of the total cost.

Within the frame of a global solution to these problems, in particular with the advent and the more and more widespread utilization of fiber optics cables, one is providing for preliminarily installing plastic preformed conduits, into one of which a first cable is inserted, while the remaining empty conduits are intended to shelter future cables, without further excavations and additional work and relevant expenses.

With so realized infrastructures, the operation for laying a new cable will be in practice an insertion or, as it is said with a neologism now largely widespread in the field of this technique, "threading" operation.

The threading, as it can be derived from the term, consists in inserting a cable into an already laid conduit and in pulling it at one of its extremities. In practice one operates as follows: one prearranges a pulling rope in the conduit, which rope is pulled by a motor winch generally with control of the speed, of the maximum allowable force and of other parameters useful to render the operation safe. At the extremity of the rope, on the side opposite the winch, the cable is hooked to and is pulled by the rope and runs in the interior of the conduit for the whole length thereof. Naturally, the longer is the cable and the more tortuous is the seat of the conduit, the more difficult is this operation.

It is recalled, in this connection, that the length of the old copper cables was of a maximum of 500 m, while, with the fiber optics cables utilized at the present day, the usual length is of 3000 m and the tendency for the future is to arrive at cable lengths of 6000 m.

To recognize the problems inherent to this technique, the following mathematical analysis is set forth.

In the case of a conduit with a route straight upon the vertical plane and upon the horizontal one, the pulling force is:

$$F = uP1$$

where:

u = the friction coefficient between the cable and the conduit,
P = The specific weight of the cable,
l = the length of the cable.

In the case of a conduit with a curved route, with some approximations, the pulling force is expressed by the reduced formula:

$$F_2 = F_1 e^{0,175\theta u}$$

where:

$F_2$ = the pulling force after the curve,
$F_2$ = the force before the curve,
$\theta$ = the curve angle,
u = the friction coefficient between the cable and the conduit.

As it can be seen, when one has curves in the route of the conduit, which curves can be contained both in the vertical plane and in the horizontal one, and this is the normal condition, the pulling force increases exponentially. While the friction coefficient is normally reduced by utilizing special lubricants (which are very expensive), the pulling force can assume, owing to its behaviour, such values as to make the whole operation fail.

A practical system normally employed to reduce the laying difficulties is that of laying one half of the length of the cable starting from one side and the other half from the other side. This involves a preliminary unwinding of the second half of the recovery bobbin with an expensive and delicate handling of the same.

GB-A-21 90 457 discloses a method for installing an optical fibre or an electrical cable into a conduit wherein the following steps are carried out: advancing the cable as dispensed from a delivery bobbin, threading one end of the cable into a first extremity of the conduit, and contemporaneously introducing a hydraulic fluid that exerts a flotation thrust and an entrainment force on the cable and brings it up to the outlet of the conduit.

WO-A-87 02 522 discloses an apparatus to use a pressurized fluid to push a so called "birdie" entraining a steel cable through a conduit. The steel cable is delivered by a bobbin operated by a fluid motor and the delivery of the cable only occurs in response to the existence of a pressurized region. When the birdie exits the other extremity of the conduit, the fluid motor ceases operating the delivery bobbin and the advancement of the cable stops.

The general object of the present invention is to suggest a process and the apparatus for realizing the same, such as to avoid the drawbacks of the systems of the prior art.

A first aspect of the invention, therefore, is concerned with a process for threading a cable into a conduit by means of a pressurized hydraulic fluid in which, in addition to advancing the cable as dispensed from a delivery bobbin, threading an end of the cable into a first extremity of the conduit and contemporaneously introducing a hydraulic fluid that exerts a flotation thrust and an entrainment force on the cable and brings it up to the outlet of the conduit, the following operations are performed: - controlling the rotation velocity of the delivery bobbin in dependance on the tension in the cable so as to keep the tension in the cable constant; and controlling the linear advancement velocity of the cable by accelerating and/or decelerating the cable according to need in such a manner as to prevent sudden accelerations/decelerations thereof and to avoid consequent water hammerings.

A second aspect of the invention is concerned with an apparatus for carrying out the aforementioned process, as defined in appended claims 2 and 4.

An advantageous embodiment of the apparatus according to the invention is defined in appended claim 3.

Further particularities and advantages of the present invention will be evident by the following disclosure with reference to the annexed drawings in which the preferred embodiment of the apparatus is illustrated by way of illustration and not of limitation, and in which:

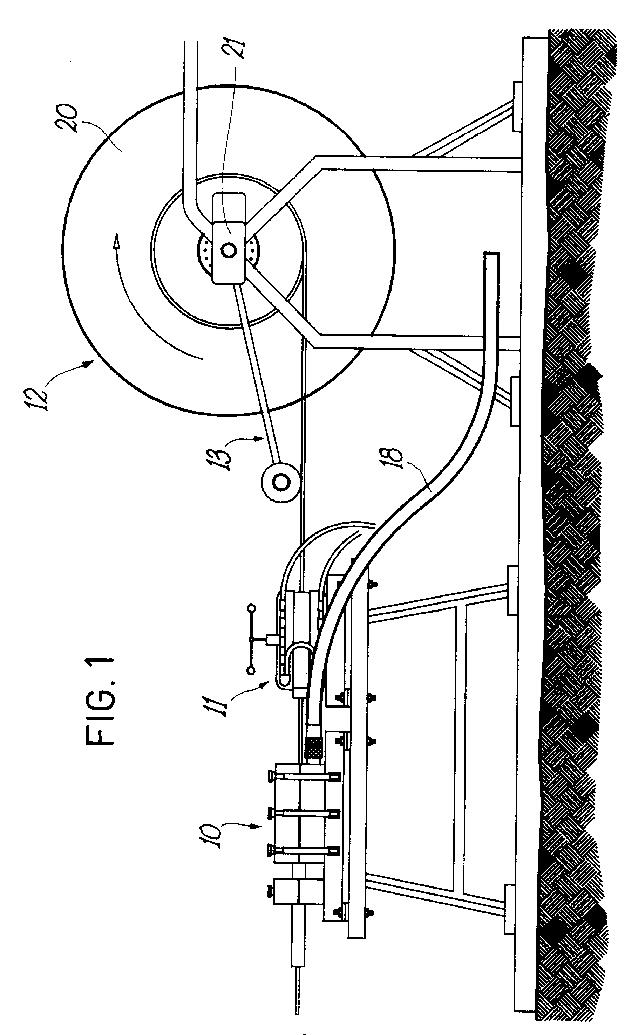

Figure 1 shows a side vertical assembly view of the apparatus for threading a cable into a conduit by means of the procedure of the present invention;

Figure 2 shows a perspective view of the flow chamber and of the controller device of the apparatus of Figure 1;

Figure 3 shows a horizontal cross section view taken at the level of the cable of the controller device;

Figure 4 shows a vertical cross section view of the controller device;

Figure 5 shows a vertical cross section view of the slide or flow chamber;

Figure 6 shows a horizontal cross section view of the slide or flow chamber;

Figure 7 is a side elevation view of a preferred arrangement of a first station of the equipment to carry out the method of this invention;

Figure 8 is a side elevation view of a preferred arrangement of a second station of the equipment to carry out the method of this invention.

With reference now to the drawings, it is seen that the apparatus for carrying out the threading process according to the present invention consists of three main sections: a flow or slide chamber 10, a controller device 11 and a cable dispenser assembly 12 with an annexed speed controller device and block 13. Auxiliary service apparatuses, such as hydraulic motors, compressors, pumps, etc. are annexed to these main sections.

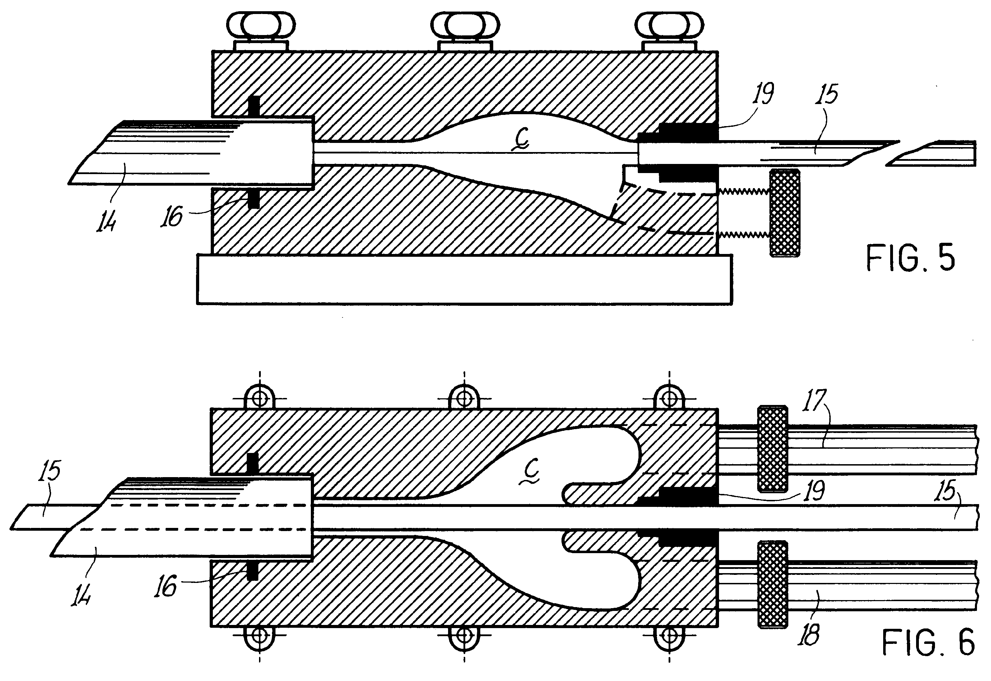

The fundamental section comprises the flow or slide chamber 10, represented in detail in Figures 5 and 6. Such a chamber comprises an internal room C and presents an outlet port and one or more inlet ports. To the outlet port the free extremity of the tube or conduit 14 into which the cable 15 is to be threaded is sealingly connected. The sealing is ensured by a suitable ring packing 16. In the embodiment of these figures, the chamber 10 presents two inlet ports connected with two tubes 17, 18 for the introduction of a pressurized hydraulic fluid, preferably water. As already mentioned and as it will be analyzed in the following, it is this hydraulic fluid that, by flowing through the conduit 14, will entrain the cable 15, pressure tightly introduced into the chamber through a suitable diameter adapter 19, also exerting upon it a flotation thrust that will tend to maintain it raised from the walls of the conduit 14 and "floating" in the conduit itself.

A drive station imparts to the fluid a pressure energy sufficient to overcome the piezometric height of the remote extremity of the tube or conduit 14 (i.e. such that the fluid exits the other extremity of the conduit), at such a flow rate that the "outflow" coefficient is close to unity (i.e. one operates under a penstock condition, such that no void regions form in the conduit 14 and the inlet flow rate is the same as the outlet flow rate) and, finally, a momentum suitable to entrain the cable.

The flow chamber system has such a configuration as to realize the same concept of Venturi's meter, as it is apparent in Figures 5 and 6, so canalizing the cable and the fluid into the conduit under the most suitable conditions.

Under these conditions, the flow speed of the fluid in the hydraulic circuit is therefore greater than the advancement speed of the cable and its value is computed on the basis of the entrainment energy necessary for each type of cable. As already said, a combined action of the flotation thrust and of the entrainment thrust is realized upon the cable , both due to the flow of the hydraulic fluid that moves in the same direction in which the cable is laid. This combined action acts upon the surface of the cable for all its length in a distributed and uniform manner.

The effect and the result of this distribution and uniformity lead back the problem, from a theoretical point of view, to that of laying a cable into a straight and plane conduit.

At this point, therefore, all those forces having an exponential variation that are encountered in all tube layouts and in particular in difficult and singular layouts disappear.

Another advantage thereby obtained is that the maximum tractive effort as the one acting upon the head of the cable when it is wholly pulled at an extremity is avoided. The latter effect, indeed, is limiting and restricts the length of the cables as industrially manufactured.

With the present invention, wherein the cable in effect floats on the fluid or at least receives a vertical thrust for flotation in it, the need to employ any lubricant to reduce the contact friction between the cable surface and the tube surface is completely eliminated.

As regards the hydraulic circuit, it is provided that it can be closed, i.e. that the fluid outgoing from the remote extremity of the conduit 14 can be recovered and sent back to a central reservoir to be recirculated. Moreover, in correspondence with the inlet port, with the outlet port and with any discontinuity points of the conduit, plastic tubular fittings can be used, so reinforced as to bear internal pressure and transparent to visualize to a certain extent the internal state of the fluid and of the cable entrained in it.

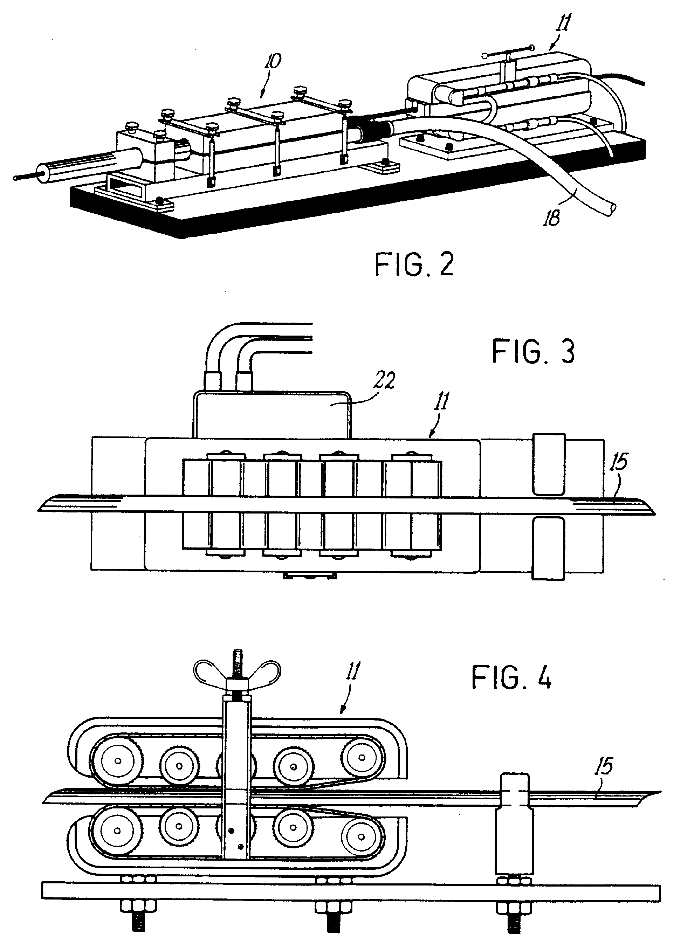

A second important section of the apparatus according to the present invention is the section of the controller device 11 represented generically in Figure 2 and in detail in Figures 3 and 4. As is seen, it consists of two track members actuated by a hydraulic motor 22, cooperating in such a manner as to tighten the cable 15 with a strong friction between the two opposed longerons and sliding in the same sense and entrained by two entrainment/drive toothed wheel trains. The function of the controller device 11 is to make the advancement speed of the cable 15, and therefore the laying speed,as much uniform as possible, in order to avoid sudden variations of such speed. Indeed, by virtue of the track structure with a strong friction force between tracks and cable, it is able to accelerate and/or braking the cable, according to need, so as to essentially avoid possible water hammerings or anyhow possible dangerous recoils recurring in penstocks of a certain length for the transport of fluids.

The third section of the apparatus is the section 12 for dispensing the cable, which comprises a bobbin 20 actuated by a motor oleodynamical system 21, having a variable speed, which rotates the bobbin 20 with the speed required by the laying procedure.

As the linear velocity of the cable has to be as constant as possible also against the variation of the diameter of the winding, a lever mechanism 13 is provided operating as a sensor of the tension of the cable 15, the output signal whereof drives the motor oleodynamical system and after all acts upon the rotation speed of the unwinding bobbin 20.

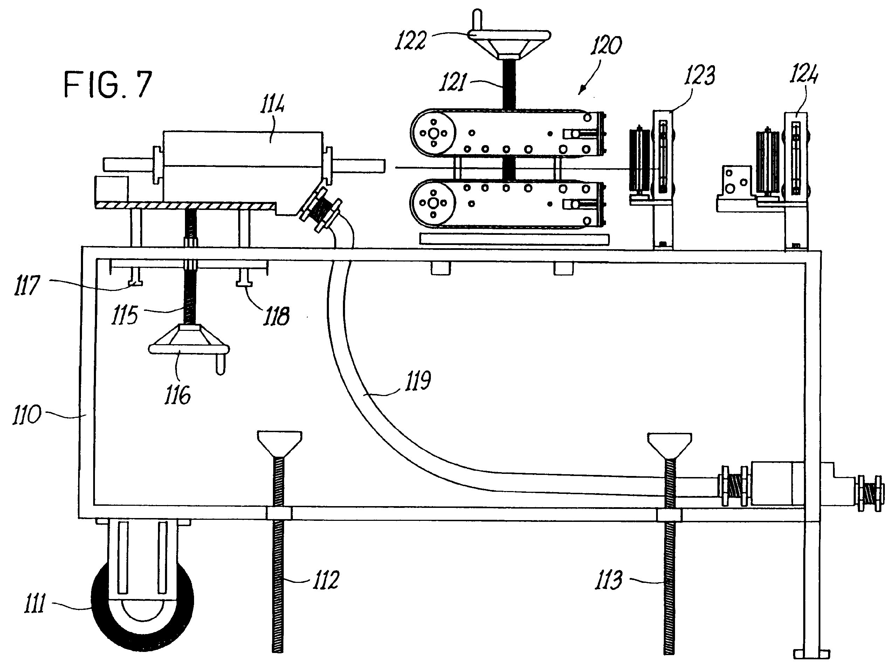

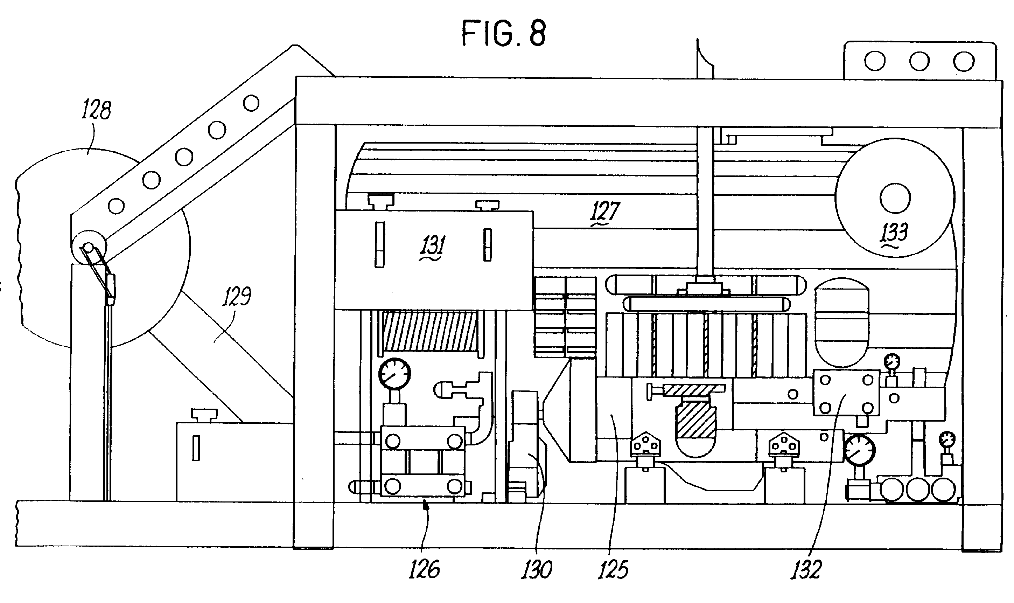

Referring now to Figs. 7 and 8 a preferred arrangement of the equipment to carry out the method of this invention is shown.

The equipment is comprised of a first and of a second station. The first station is the driving station and is aimed at threading and forwarding the cable. This station is very light and is mounted upon a mobile frame 110. A castor wheel 111 and the ground legs 112 and 113 are shown. A flow chamber unit 114, the operation of which has already been described, is mounted upon the upper table of the frame 110. The flow chamber unit 114 is adjustable as to height by means of a lead screw 115 with a handwheel 116. The planarity of the flow chamber unit 114 is adjusted by adjustement screws 117, 118.

High pressure water supply tube 119 is connected from the supply section to the flow chamber unit 114. The cable to be threaded is supplied to the flow chamber unit 114 by means of a controller unit 120 designed to adjust and regulate the driving speed and consisting of two track members with a lead screw 121 and a control handwheel 122.

Two cable guiding roller assemblies 123 and 124 are arranged upstream of the controller unit 120. Each roller assembly includes two roller pairs arranged with mutually orthogonal axis.

A control board (not shown) is also part of this section.

The second station of the equipment as shown in Fig. 8 substantially includes an internal combustion engine 125 with automatic starter, by which the water pumping section 126 as well as other hydraulic units are powered. The pressure water supply tube 119 is connected to the outlet of said water pumping section 126.

The second station is a supply station and also comprises the water supply tank 127 and a mobile container for the cable coil 128, which is operated by means of a chain belt drive housed in a shaped case 129.

A gear reduction unit is designated with 130 and a tank for the hydraulic oil needed for the operation of the pump unit 126 is shown with 131.

Further components are a hydraulic pump 132 for driving the cable coil 128 and a winding-up device 133 for a self-contained water feeding hose.

In order to better understand the invention, a mathematical analysis of the parameters and of the magnitudes at hand will be now set forth.

Basic Principles

The fundamental quantities that characterize the flotation system of the present invention, considering a tube element of one meter, water as the fluid and a fiber-optics cable weighing 350 g/m, are:

1) FLOTATION THRUST
$$\underline{F}_g = (D/2)^2 \times 3.14 \times 1 \times J$$
$$= (0.025/2)^2 \times 3.14 \times 1 \times 10^3 = 0.314 \text{ kg}$$
where:

    $D$ = 20 mm, the diameter of the cable,

    $J$ = 1000 kg/m$^3$, the specific gravity of water.

2) FLUID SPEED

The pulling force is:
$$Ft = u \times P \times l$$
$$= 0.1 \times 0.35 \times 1 = 0.035 \text{ kg}$$
The thrust of the fluid on the cable is:
$$F_s = \rho \, q(V - C) = \rho \times V(V - C)$$

$$0.035 = 102 \times 78.5 \times 10^{-4} \times V \times (V - 0.5)$$
$$V^2 - 0.5V - 0.044 = O$$

The real solution is:

$$\underline{V} = 0.58 \text{ m/s}$$

where:

u = 0.1, the residual friction coefficient between the surface of the cable and the tube,

P = the specific gravity of the cable,

$\rho$ = 102, the density of water,

q = the flow rate of the fluid,

V = the velocity of the fluid,

C = 0.5 m/s, the laying velocity,

$F_t = F_s$,

$S = R_c \times R_t \times 3.14$, the section reacting against the thrust,

$R_c$ = 10 mm, the radius of the cable,

$R_t$ = 25 mm, the radius of the tube.

3) FLUID FLOW RATE

The flow rate under non turbulent laminar flow conditions is:

$$\underline{q} = AV$$
$$= 78.5 \times 10^{-4} \times 0.58 = 45.53 \times 10^{-4} \text{ m}^3\text{/s}$$
$$= 4.55 \text{ l/s},$$

where: A = the vertical section of the tube.

4) THRUST ON THE CABLE

The thrust of the fluid on the cable is:

$$F_s = \rho \, q(V - C)$$
$$= 102 \times 45.53 \times 10^{-4} \times (0.58 - 0.5)$$
$$= 0.0372 \text{ kg.}$$

5) HEAD LOSS

The head loss for a penstock with the exclusive service of extremity with a single diameter is :

$$\underline{Y} = Bq^2D^{-5}$$
$$= 2.02 \times 10^{-3}(45.53 \times 10^{-4})/3.125 \times 10^{-7}$$
$$= 0.13 \text{ m/m}$$

where:

B = roughness coefficient in Darcy's formula, 1

$= 1.26 \times 10^{-3} + 38 \times 10^{-6}/D$

$= 2.02 \times 10^{-3}$

D = 50 mm, the diameter of the tube.

6) DRIVING POWER

The necessary power, considering the tube in a plane, is:

$$\underline{W} = Jq[V^2/2g + C^2/2g + \Sigma Y]$$
$$= 0.1365 + 4.55Y \text{ kgm/s}$$
$$= 6.1 \times 10^2 \times Y \text{ CV}$$

where:

g = gravity acceleration

$\Sigma Y$ = summation of the head losses of the tube.

RESULTS

With the flotation and entrainment system by means of a fluid, it happens that:

- it is possible to lay a cable length of 6000 m with a single apparatus from a single side with a solution of continuity,

- it is possible to achieve an average laying speed of about 30 m/min,

- it is not normally necessary to synchronize the different apparatuses that intervene in the manufacture,

- it is possible to eliminate the pulling forces of exponential nature,

- it is possible to obtain an entrainment force distributed along the cable being laid.

In conclusion, resuming, the system according to the present invention:

- avoids preliminarly laying a rope for pulling the cable;

- avoids the singular distributed and/or concentrated overload tensions during the laying operations of the cable;

- allows laying cables also in "difficult" runs;

- allows laying cables of any length;

- can lower the manufacturing costs of the fiber optics cables, reducing the quantity of Kevlar, used at the present day for mechanical protection against the pulling effort.

All the process has been disclosed with reference to a purely exemplifying embodiment, those skilled in the art being evidently able to conceive variations that allow the same end to be reached, by exploiting the same principles, without so departing from the scope of the present invention, which is defined by the appended claims.

**Claims**

1. A process for threading a cable (15) into a conduit (14) by means of a hydraulic fluid comprising

- advancing the cable (15) as dispensed by a delivery bobbin (20),

- threading one end of the cable (15) into a first extremity of the conduit (14) and

- contemporaneously introducing a hydraulic fluid into said conduit (14) so as to exert a flotation thrust and an entrainment force on the cable (15) and to bring it up to the outlet port of the conduit (14),

CHARACTERIZED IN THAT it comprises the following further steps:

- controlling the rotation velocity of the delivery bobbin (20) so as to keep the tension in the cable (15) constant, and

- controlling the linear advancement velocity of the cable (15) so as to make it uniform.

2. An apparatus for threading a cable (15) into a conduit (14) by using a hydraulic fluid as a flotation and entrainment means, comprising a cable holder bobbin (20), operated by a variable velocity oleodynamic motor (21) to dispense the cable, a device (13) for controlling the rotation velocity of the bobbin (20), a controller device (11) for controlling the linear advancement velocity of the cable (15) and a flow chamber (10) hermetically connected to the inlet extremity of the conduit (14) to contemporaneously canalize the cable (15) to be threaded and the flotation/entrainment hydraulic fluid thereinto,

CHARACTERIZED IN THAT

a lever device (13) cooperates with said cable (15) as dispensed from said bobbin (20) to sense the tension in the cable (15) and to drive said variable velocity oleodynamic motor (21) in dependance thereon so as to keep the tension in the cable (15) constant,

said controller device (11) comprises two track loops wherebetween the advancing cable (15) is engaged with high friction, said two track loops being operated by means of two entrainment/drive tooothed wheel trains driven by a hydraulic motor (22), and

said flow chamber (10) comprises an internal room (C) based upon the concept of the Venturi's meter and one or more inlet ports for the cable flotation/entrainment hydraulic fluid.

3. An apparatus for threading a cable into a conduit according to claim 2, characterized in that the hydraulic circuit for feeding the flotation/entrainment hydraulic fluid is a closed circuit that recovers the hydraulic fluid coming out from the remote extremity of the conduit (14) and brings it back to a central reservoir.

4. An apparatus for threading a cable into a conduit by using a hydraulic fluid as a flotation and entrainment means comprising in combination a driving station and a supply station, the driving station being mounted upon a mobile frame (110) which has arranged upon its upper table a flow chamber unit (114) adjustable in height and planarity, and a high pressure water supply tube (119) connected thereto, as well as a two track assembly to adjust and regulate the cable advancement speed and, upstream thereto, two cable guide units (123,124); the supply station substantially comprises an internal combustion engine (125) operating a water pumping section (126) to which said high pressure water supply tube (119) is connected, a water supply tank (127), a rotatable bobbin (128) for the cable coil, powered by a chain or belt driving member housed in a shaped case (129), a gear reduction unit (130), a tank for the hydraulic oil needed for operation of the water pumping section (126), as well as a hydraulic pump (132) to drive the cable coil, a device (13) for sensing the tension in the cable and for controlling the hydraulic pump (132) so as to maintain the tension constant and a winding-up device (133) for a self-contained water feeding hose.

**Patentansprüche**

1. Verfahren zur Verlegung eines Kabels (15) in eine Rohrleitung (14) vermittels einer hydraulischen Druck flüssigkeit, wobei

   - das Kabel (15) von einer Vorratspule (20) versorgt wird;
   - ein Ende des Kabels (15) in ein erstes Ende der Rohrleitung (14) eingeführt wird und
   - gleichzeitig eine hydraulische Flüssigkeit in die Leitung (14) eingeströmt wird, um einen Flotationsdruck und eine Mitnahmekraft auf das Kabel (15) auszüben und es zur Ausgangsöffnung der Leitung (14) hinzureissen,

     gekennzeichnet durch die folgenden weiteren Verfahrensschritte:
   - Steuerung der Drehgeschwindigkeit der Vorratsspule (20), um die Spannung des Kabels (15) konstant zu halten;
   - Steuerung der linearen Fördergeschwindigkeit des Kabels (15), um sie konstant zu halten.

2. Vorrichtung zur Verlegung eines Kabels (15) in eine Rohrleitung (14) vermittels einer hydraulischen Flüssigkeit als Flotations- und Reissmittel, mit einer Kabelvorratsspule (20), die durch einen öldynamischen Motor (21) mit veränderlichen Geschwindigkeit zur Kabelversorgung antreibar ist, einer Einrichtung (13) zum Steuern der Drehgeschwindigkeit der Spule (20), einer Steuervorrichtung (11) zur Steuerung der linearen Fördergeschwindigkeit des Kabels(13) und mit einem dicht mit dem Eintrittsende der Leitung (14) verbundenen Strömungsraum (10) zur gleichzeitigen Einführung des zu verlegenden Kabels (15) und der hydraulischen Flotations- und Mitreissflüssigkeit,

   dadurch gekennzeichnet, dass
   - eine Hebelanordnung (13) mit dem von der Vorratsspule (20) gelieferten Kabel (15) zur Ermittlung der Spannung desselben und zur entsprechenden Steuerung des vorgenannten öldynamischen, mit veraenderbaren Geschwindigkeit antreibbaren Motors (21) so mitarbeitet, dass die Spannung des Kabels (15) konstant gehalten wird;
   - die vorgenannte Steuereinrichtung (11) zwei raupenartige Foerderer enthält, zwischen den das gelieferte Kabel (15) mit starkem Reibungschluss geführt wird, wobei die vorgenannten Förderer durch zwei Mitnahme- und Steuerzahnradzüge gesteuert werden, die durch einen hydraulischen Motor (22) angetrieben werden und

- die vorgenannte Strömungskammer einen inneren Raum, der auf dem Grundgedanken des Venturirohrs basiert ist, und eine oder mehrere Einflussöffnungen fuer die hydraulische Fluessigkeit zur Flotation und zum Mitreissen des Kabels enthält.

3. Vorrichtung zur Einführung eines Kabels in eine Rohrleitung nach Anspruch 2, dadurch gekennzeichnet, dass der hydraulische Strömkreis zur Versorgung des hydraulischen Flotations- und Mitreissflüssigkeit ein geschlossener Strömkreis ist, der die hydraulische Fluessigkeit am entfernten Ausflussende der Leitung rückgewinnt und zum Zentralvorratbehälter zurückführt.

4. Vorrichtung zur Einführung eines Kabels in eine Rohrleitung vermittels einer hydraulischen Flüssigkeit als Flotations- und Mitreissmittel, worin folgende Mittel untereinander zusammenarbeiten: eine Steuerstelle und eine Versorgungsstelle, wobei die Steuerstelle auf einem verstellbaren Rahmen (110) gelagert ist, auf dessen oberer Platte eine in Höhe und Neigung einstellbare Strömungskammerreinheit (114), ein an diese verbundenes Rohr (119) zur Zuführung von Wasser unter Hochdruck, zwei raupenartige Anordnungen zur Nach- und Einstellung der Fördergeschwindigkeit des Kabels und vorgeordenete Führungseinheiten des Kabels (123,124) angeordnet sind und wobei die Versorgungstelle wesentlich eine Brennkraftmachine (125), die eine Wasserpumpeanordnung (126) steuert, an welche das vorgenannte Hochdruckwasser-Versorgungsrohr (119) angeschlossen ist, einen Wasservorratsbehälter (127), eine Drehspule (128) für die Kabelwicklung, die durch einen in einem Formgehäuse (129) enthaltenen Kette- oder Riemenanordnung angetrieben wird, ein Untersetzungsgetriebe (130), einen Behälter für das zum Antreiben der Wasserpumpeanordnung notwendige hydraulische Öl, eine hydraulische Pumpe(132) zur Steuerung der Kabelwicklung, eine Vorrichtung (13) zur Ermittlung der Kabelspannung und zur Steuerung der hydraulischen Pumpe (132) zur Konstanthaltung dieser Spannung und eine Aufwicklungsvorrichtung (133) für einen selbstständigen Wasserversorgungsschlauch aufweist.

**Revendications**

1. Procédé de pose d'un cable (15) dans un tube (14) à l'aide d'un fluide hydraulique sous pression, comprenant

- avancement du cable (15) à mesure qu'il est alimenté d'une bobine d'alimentation (20);
- introduction d'une extrémité du cable (15) dans un bout du tube (14) et
- introduction simultanée d'un fluide hydraulique dans ledit tube (14) de façon à exercer une poussée de flottage et une force d'entraînement sur le cable (15) et pour l'amener à l'ouverture de sortie du tube (14);

    caractérisé en ce qu'il comprend les suivantes phases ultérieures:
- contrôle de la vitesse de rotation de la bobine d'alimentation (20) pour tenir constante la tension dans le cable (15)
- contrôle de la vitese d'avancement linéaire du cable (15) pour rendre la même uniforme.

2. Dispositif de pose d'un cable (15) dans un tube (14) à l'aide d'un fluide hydraulique comme moyen de poussée et d'entraînment, comprenant une bobine de cable (20) actionnée par un moteur oléodynamique à velocité variable (21) pour alimenter le cable, un dispositif (13) pour contrôler la velocité de rotation de la bobine (20), un dispositif de contrôle (11) pour contrôler la velocité d'avancement linéaire du cable (15) et une chambre de flux (10) jointe hermétiquement au bout d'entré du tube (14) pour introduir en même temps dans le tube le cable (15) à poser et le fluide hydraulique de poussée et d'entraînment,

    caractérisé en ce que

    un dispositif à levier (13) coopére avec ledit cable (15) à mesure qu'il est aliménté de ladite bobine (20) pour relever la tension dans le cable (15) et pour actionner ledit moteur oléodynamique à velocité variable en function de la même, pour tenir constante la tension du cable (15);

    ledit dispositif de contrôle (11) comprend deux convoyeurs chenillés, entre lesquels le cable (15) est engagé à friction, lesdits convoyeurs chenillés étant actionnés au moyen de deux trains de roux dentés d'entraînement et d'actionnement, actionnés par un moteur hydraulique (22) et

    ladite chambre de flux comprend un espace intérieure (c) basé sur la conception d'un venturi et une ou plusieurs ouvertures d'entré pour le cable et le fluide hydraulique d'entraînement et de poussée:

3. Dispositif de pose d'un cable dans un tube selon la revendication 2, caractérisé en ce que le circuit hydraulique pour alimenter le fluide hydraulique est un circuit fermé, qui reçoit le fluide hydraulique s'écoulante du bout éloigne du tube (14) et le reporte à un réservoir central.

4. Dispositif de pose d'un cable dans un tube à l'aid d'un fluide hydraulique comme moyen de flottage et d'entraînement, comprenand en combination une station de commande et une station d'alimentation, la station de commande étant montée sur un châssis mobile (110), sur une table supériéure duquel étant montés une unité de chambre de flux (114) réglable en hauteur et nivellement et un tube d'alimentation d'eau à forte pression (119) joint à la même, ainsi que un ensemble à deux chenilles pour arranger et régler la velocité d'avancement du cable et, en amont du même, deux unités de guide (123,124) du cable; la station d'alimentation comprend essentiellement un moteur à combustion interne (125) actionnant une section à pompe d'eau (126), à laquelle est joint ledit tube d'alimentation d'eau à forte pression (119), un réservoir d'alimetation d'eau, une bobine tournante (128) pour le rouleau de cable, actionnée par un élément de commande à chaîn ou courroie situé dans une caisse formée (129), une unité de réduction à engrenages (130), un réservoir pour l'huile hydraulique nécessaire pour actionner la section de pompe d'eau (126), ainsi que une pompe hydraulique (132) pour entraîner la bobine de cable, un dispositif (13) pour rélever la tension dans le cable et pour contrôler la pompe hydraulique (132) de façon à maintenir constante la tension et un dispositif de enroulement (133) pour un tuyau flexible d'eau autonome.

FIG. 1

EP 0 578 693 B1

FIG. 2

FIG. 3

FIG. 4

FIG. 5

FIG. 6

FIG. 7

FIG.8